# EUROPÄISCHE PATENTANMELDUNG

(11) **EP 2 105 235 A1**
(43) Veröffentlichungstag der Anmeldung: **30.09.2009**
(21) Anmeldenummer: 08005618.7
(22) Anmeldetag: 26.03.2008
(51) Int. Cl.: B23H 1/00, B23H 9/00, B23H 7/38

(54) **Verfahren und Vorrichtung zur funkenerosiven Bearbeitung eines elektrisch nich leitenden Materials**

(71) Anmelder: SIEMENS AKTIENGESELLSCHAFT, 80333 München (DE)
(72) Erfinder: Bergander, Katharina, 13503 Berlin (DE); Laudien, Ulrich, 10555 Berlin (DE); Thomaidis, Dimitrios, Dr., 10367 Berlin (DE)

(57) **Zusammenfassung**

Die Erfindung betrifft ein Verfahren zur funkenerosiven Bearbeitung eines keramischen Materials (6), bei dem eine Bearbeitungselektrode (3) beabstandet oberhalb eines Bearbeitungsbereichs (15) des keramische Materials (6) in einem Dielektrikum angeordnet, an die Bearbeitungselektrode (3) und das keramische Material (6) eine elektrische Spannung angelegt und das keramische Material (6) zumindest im Bearbeitungsbereich (15) auf eine Temperatur erhitzt wird, bei der es elektrisch leitend wird.

## Beschreibung

Die vorliegende Erfindung betrifft ein Verfahren zur funkenerosiven Bearbeitung eines keramischen Materials, bei dem eine Bearbeitungselektrode beabstandet oberhalb eines Bearbeitungsbereichs des keramische Materials in einem Dielektrikum angeordnet und an die Bearbeitungselektrode und das keramische Material eine elektrische Spannung angelegt wird. Weiterhin betrifft die Erfindung eine Vorrichtung zur Durchführung des Verfahrens.

Im Stand der Technik sind Verfahren zur funkenerosiven Bearbeitung elektrisch nicht leitender Materialien beschrieben. So offenbart beispielsweise die DE 4 102 250 A1 ein Verfahren, bei dem das elektrisch nicht leitende Material vor seiner Bearbeitung mit einer elektrisch leitenden Substanz beschichtet wird. Diese Schicht wird als Assistenzelektrode verwendet, die bei der funkenerosiven Bearbeitung eine elektrische Kontaktierung zu einer Arbeitselektrode herstellt. Das mit der Assistenzelektrode beschichtete, elektrisch nicht leitende Material und zumindest der zur Assistenzelektrode weisende Endbereich der Arbeitselektrode, bei dem es bei der Bearbeitung zur Funkenentladung kommt, sind in ein Dielektrikum getaucht, das durch eine Flüssigkeit wie Kerosin oder auch durch ein Gas gebildet wird.

Wenn an die Anordnung eine geeignete Spannung angelegt wird, kommt es zwischen der Arbeitselektrode und der Assistenzelektrode zu einer Funkenentladung. In deren Folge werden Teile der Assistenzelektrode sowie des darunter liegenden elektrisch nicht leitenden Materials abgetragen. Gleichzeitig wird ein Teil des Dielektrikums gecrackt, wodurch Kohlenstoff oder leitfähige Carbide entstehen, die in der Form einer elektrisch leitfähigen Schicht auf den freigelegten Oberflächenbereichen des nicht leitenden Materials abgeschieden werden. Die neu abgeschiedene elektrisch leitende Schicht ersetzt somit das abgetragene Material der Assistenzelektrode und stellt bei einem Vordringen der Arbeitselektrode in das nicht leitende Material eine leitende Verbindung zu der Oberfläche des nicht leitenden Materials her, so dass eine kontinuierliche Bearbeitung möglich ist.

Das bekannte Verfahren zur funkenerosiven Bearbeitung elektrisch nicht leitender Materialien ist aufwendig, langsam und störungsanfällig. So muss vor Beginn der Bearbeitung zunächst eine Assistenzelektrode auf das elektrisch nicht leitende Material aufgebracht werden. Weiterhin ist die Bearbeitungsgeschwindigkeit durch die sich nur langsam neu bildende Carbidschicht begrenzt. Darüber hinaus kann die während der Bearbeitung nachgebildete dünne Carbidschicht beispielsweise durch Erschütterungen leicht beschädigt werden, was dann dazu führt, dass die Bearbeitung nicht weiter fortgesetzt werden kann, da kein leitfähiger Kontakt mehr vorhanden ist, der eine erneute Funkenentladung bewirken könnte.

Es ist daher Aufgabe der vorliegenden Erfindung ein Verfahren der Eingangs genannten Art anzugeben, das eine einfache und sichere funkenerosive Bearbeitung eines elektrisch nicht leitenden Materials ermöglicht.

Diese Aufgabe wird erfindungsgemäß dadurch gelöst, dass das keramische Material zumindest im Bearbeitungsbereich auf eine Temperatur erhitzt wird, bei der es elektrisch leitend wird.

Grundgedanke der Erfindung ist somit, das zu bearbeitende keramische Material zumindest im Bearbeitungsbereich soweit zu erhitzen, dass es elektrisch leitend wird. Somit ist es bei dem erfindungsgemäßen Verfahren nicht notwendig, eine Hilfselektrode gleich welcher Art zu verwenden, um eine Kontaktierung der Arbeitselektrode während der Bearbeitung zu ermöglichen. Vielmehr wird durch das Erhitzen des keramischen Materials dieses reversible aus einem elektrisch nicht leitenden in einen elektrisch leitenden Zustand überführt, so dass es selbst als Elektrode dient.

Da keine zusätzliche Hilfselektrode aufgebracht werden muss, ist das erfindungsgemäße Verfahren besonders einfach und schnell. Weiterhin ist es auch nicht störanfällig, da eine die Bearbeitung unterbrechende Beschädigung der Hilfselektrode ausgeschlossen ist.

Gemäß einer ersten Ausführungsform der Erfindung ist vorgesehen, dass das keramische Material lokal im Bearbeitungsbereich erhitzt wird. Hierbei ist vorteilhaft, dass der für das Herstellen der Leitfähigkeit benötigte Energiebedarf minimiert wird.

Es ist ebenfalls möglich, das keramische Material als Ganzes insbesondere in einem Ofen zu erhitzen. Auf diese Weise kann die Ausbildung von thermischen Spannungen in dem keramischen Material verhindert werden.

Eine weitere bevorzugte Ausführungsform der Erfindung sieht vor, das keramische Material durch Strahlung zu erhitzen. Dabei kann insbesondere Wärme- und/oder Laserstrahlung zum Einsatz kommen. Mit Hilfe von Laserstrahlung kann insbesondere das keramische Material lokal im Bearbeitungsbereich erhitzt werden.

Gemäß einer weiteren Ausführungsform der Erfindung ist vorgesehen, das keramische Material mit Hilfe eines heißen Dielektrikums zu erhitzen. Dabei kann das Dielektrikum beispielsweise auf eine geeignete Temperatur gebracht werden, indem es innerhalb oder außerhalb des Bearbeitungsraums erhitzt wird. Wenn das Dielektrikum außerhalb des Bearbeitungsraums erhitzt wird, kann es vorteilhafterweise so in den Bearbeitungsraum eingebracht werden, dass es zuerst auf das keramische Material im Bearbeitungsbereich trifft. Auf diese Weise wird sichergestellt, dass ein maximaler Wärmeübertrag von dem Dielektrikum auf das keramische Material im Bearbeitungsbereich erzielt wird.

Bei dem erfindungsgemäßen Verfahren kann ein flüssiges oder gasförmiges Dielektrikum verwendet werden.

In Weiterbildung der Erfindung ist vorgesehen, ein Zirconiumdioxid-haltiges keramisches Material funkenerosiv zu bearbeiten. Das zu bearbeitende Material kann insbesondere 90% bis 100% Zirconiumdioxid enthalten. Vorteilhafter Weise wird das Zirconiumdioxid-haltige Material bei der Bearbeitung auf eine Temperatur größer 800°C erhitzt.

Eine weitere bevorzugte Ausführungsform der Erfindung sieht vor, dass eine keramische Bearbeitungselektrode insbesondere aus Zirconiumdioxid verwendet wird, die auf eine Temperatur erhitzt wird, bei der sie elektrisch leitend wird. Eine derartige keramische Bearbeitungselektrode weist eine hohe Widerstandsfähigkeit und Haltbarkeit auf.

Erfindungsgemäß kann eine Zirconiumoxid-haltige keramische Wärmedämmschicht auf einem Turbinenbauteil wie einer Turbinenschaufel funkenerosiv bearbeitet werden. Es ist dabei insbesondere auch möglich, komplexe Geometrien, beispielsweise von Kühlluftbohrungen, auf einfache, sichere und schnelle Weise herzustellen.

Die erfindungsgemäße Aufgabe wird weiterhin durch eine Vorrichtung mit den Merkmalen des Anspruchs 10 gelöst, wobei vorteilhafte Ausgestaltungen der Vorrichtung in den Unteransprüchen angegeben sind.

Die Erfindung wird im Folgenden an Hand von zwei Ausführungsbeispielen unter Bezugnahme auf die Zeichnung im Detail erläutert.

In der Zeichnung zeigen:
- Figur 1: eine schematische Darstellung einer ersten erfin- dungsgemäßen Vorrichtung zur funkenerosiven Bear- beitung und
- Figur 2: eine schematische Darstellung einer zweiten erfin- dungsgemäßen Vorrichtung zur funkenerosiven Bear- beitung.

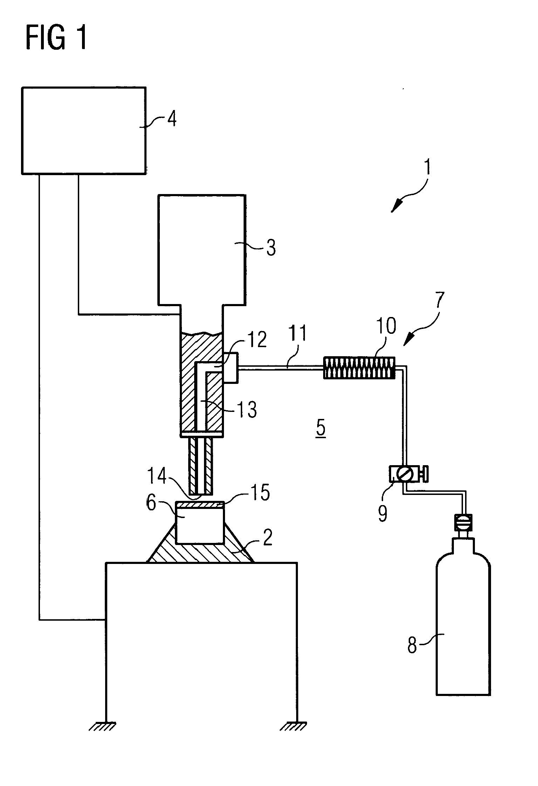

In der Figur 1 ist in schematischer Weise eine Vorrichtung 1 zum funkenerosiven Bearbeiten eines Zirconiumoxid-haltigen keramischen Materials dargestellt. Die Vorrichtung 1 weist eine Halterung 2, eine Bearbeitungselektrode 3, einen Generator 4 und einen Bearbeitungsraum 5 auf. Die Halterung 2 und die Bearbeitungselektrode 3 sind in dem Bearbeitungsraum 5 angeordnet und jeweils elektrisch leitend mit dem Generator 4 verbunden. In der Halterung 2 ist ein Zirconiumoxid-haltiges keramisches Material 6 fixiert, bei dem es sich beispielsweise um eine Wärmedämmschicht auf einer Turbinenschaufel handeln kann. Die Bearbeitungselektrode 3 ist mit geringem Abstand oberhalb eines Bearbeitungsbereichs 15 des keramischen Materials 6 angeordnet.

Es ist weiterhin eine Einrichtung 7 zum Einleiten eines heißen gasförmigen Dielektrikums in den Bearbeitungsraum 5 vorgesehen. Die Einrichtung 7 umfasst eine Gasflasche 8, die das gasförmige Dielektrikum enthält und die über einen Druckminderer 9 mit einem Gaserhitzer 10 verbunden ist. Von dem Gaserhitzer 10 führt eine Leitung 11 zu der Bearbeitungselektrode 3, wo sie über eine Zuleitung 12 mit einer koaxialen, die Bearbeitungselektrode 3 durchsetzende Bohrung 13 verbunden ist. Die Bohrung 13 weist eine Austrittsöffnung 14 auf, die in der Zeichnung oberhalb des Bearbeitungsbereiches 15 des keramischen Materials 6 angeordnet ist.

Um mit der Vorrichtung das in der Halterung 2 fixierte Zirconiumoxid-haltigen keramischen Material 6 funkenerosiv zu bearbeiten, wird gasförmiges Dielektrikum aus der Gasflasche 8 über den Druckminderer 9 dem Gaserhitzer 10 zugeführt. In dem Gaserhitzer 10 wird das Dielektrikum erhitzt und anschließend durch die Leitung 11 und die Zuleitung 12 in die Bohrung 13 der Bearbeitungselektrode 3 geleitet. Aus der Bohrung 13 tritt das heiße gasförmige Dielektrikum an der Austrittsöffnung 14 aus und strömt dabei auf den Bearbeitungsbereich 15 des keramischen Materials 6, wodurch dieser besonders stark erhitzt wird.

Während des Erhitzens des keramischen Materials wird mit Hilfe des Generators 4 eine geeignete Spannung an die Bearbeitungselektrode 3 und an die Halterung 2 angelegt. Sobald die Temperatur des keramischen Materials 6 800°C übersteigt, wird das keramische Material selbst elektrisch leitend, so dass es im Bearbeitungsbereich 15 zu einer Funkenentladung zwischen der Bearbeitungselektrode 3 und dem keramischen Material 6 kommt, bei der Teile des keramischen Materials 6 verdampft werden.

Zur weiteren Bearbeitung des keramischen Materials 6 kann die Bearbeitungselektrode 3 in eine neue Position relativ zum keramischen Material 6 gebracht werden.

Mit Hilfe der beschriebenen Vorrichtung 1 kann das keramische Material einfach, sicher und schnell funkenerosive bearbeitet werden. Die Gefahr der Unterbrechung der Bearbeitung besteht nicht.

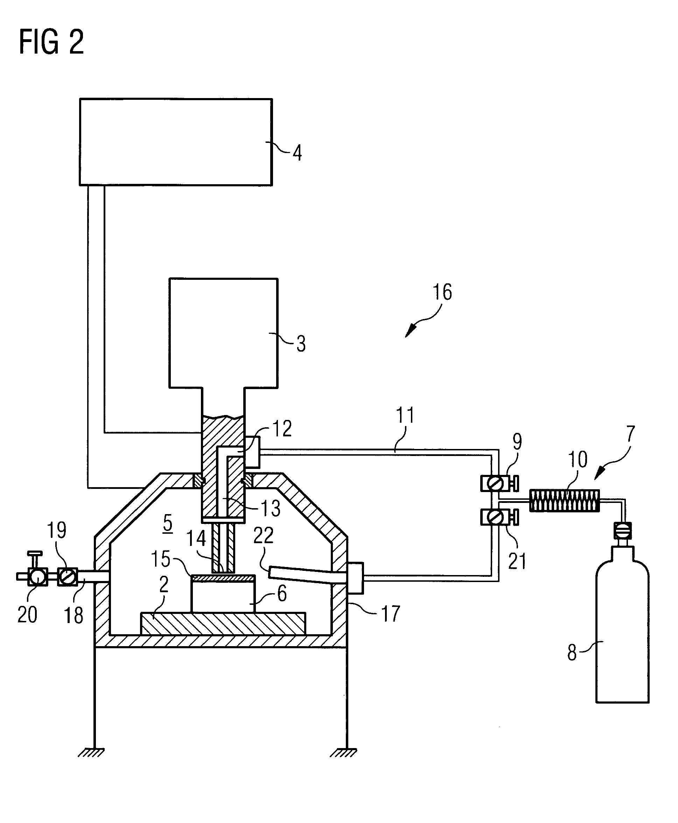

In der Figur 2 ist eine zweite erfindungsgemäße Vorrichtung 16 zur funkenerosiven Bearbeitung schematisch dargestellt, die im Wesentlichen mit der der Figur 1 gezeigten übereinstimmt. Daher sind bei dieser Ausführungsform gleiche Bauteile mit den gleichen Bezugszeichen versehen.

Die Vorrichtung 16 weist einen Bearbeitungsraum 5 auf, der von einem Ofen 17 umschlossen ist. Der Ofen 17 ist über eine Ableitung 18 mit einem Manometer 19 und mit einem Überdruckventil 20 verbunden. Weiterhin ist in der Leitung 11 eine Verzweigung vorgesehen, die über einen zweiten Druckminderer 21 zu einer Zuführöffnung 22 in den Bearbeitungsraum 5 innerhalb des Ofens 17 führt.

Die funkenerosive Bearbeitung des keramischen Materials 6 erfolgt grundsätzlich in der oben beschriebenen Weise. So kann auch bei der Vorrichtung 16 das keramische Material 6 durch Zuführung von heißem gasförmigem Dielektrikum durch die Bohrung 13 in der Bearbeitungselektrode 3 insbesondere im Bearbeitungsbereich 15 erhitzt werden. Alternativ kann das heiße Dielektrikum aber auch ganz oder teilweise durch die Zuführöffnung 22 in den Bearbeitungsraum 5 eingebracht werden.

Der gesamte Inhalt Bearbeitungsraum 5 kann auch zusätzlich oder ausschließlich mit dem Ofen 17 erhitzt werden. Dabei kann mit Hilfe des Überdruckventils 20 verhindert werden, dass im Ofen 17 beim Erhitzen ein Überdruck entsteht.

Die Vorrichtungen 1 und 16 können alternativ oder zusätzlich auch Strahler wie Wärme- oder Laserstrahler aufweisen, die insbesondere so angeordnet sein können, dass sie Strahlung auf den Bearbeitungsbereich 15 des keramischen Materials abgeben.

## Patentansprüche

1. Verfahren zur funkenerosiven Bearbeitung eines keramischen Materials (6),
bei dem eine Bearbeitungselektrode (3) beabstandet oberhalb eines Bearbeitungsbereichs (15) des keramische Materials (6) in einem Dielektrikum angeordnet und an die Bearbeitungselektrode (3) und das keramische Material (6) eine elektrische Spannung angelegt wird,
**dadurch gekennzeichnet, dass**
das keramische Material (6) zumindest im Bearbeitungsbereich (15) auf eine Temperatur erhitzt wird, bei der es elektrisch leitend wird.

2. Verfahren nach Anspruch 1,
**dadurch gekennzeichnet, dass**
das keramische Material (6) lokal im Bearbeitungsbereich (15) erhitzt wird.

3. Verfahren nach Anspruch 1,
**dadurch gekennzeichnet, dass**
das keramische Material (6) als Ganzes insbesondere in einem Ofen (17) erhitzt wird.

4. Verfahren nach einem der vorhergehenden Ansprüche,
**dadurch gekennzeichnet, dass**
das keramische Material (6) durch Strahlung, insbesondere durch Wärme- und/oder Laserstrahlung erhitzt wird.

5. Verfahren nach einem der vorhergehenden Ansprüche,
**dadurch gekennzeichnet, dass**
das keramische Material (6) mit Hilfe eines heißen Dielektrikum erhitzt wird.

6. Verfahren nach einem der vorhergehenden Ansprüche,
**dadurch gekennzeichnet, dass**
ein flüssiges oder gasförmiges Dielektrikum verwendet wird.

7. Verfahren nach einem der vorhergehenden Ansprüche,
**dadurch gekennzeichnet, dass**
ein Zirconiumdioxid-haltiges keramisches Material funkenerosiv bearbeitet wird.

8. Verfahren nach einem der vorhergehenden Ansprüche,
**dadurch gekennzeichnet, dass**
eine keramische Bearbeitungselektrode (3),
insbesondere aus Zirconiumdioxid,
verwendet wird, die auf eine Temperatur erhitzt wird, bei der sie elektrisch leitend wird.

9. Verfahren nach einem der vorhergehenden Ansprüche,
**dadurch gekennzeichnet, dass**
eine Zirconiumdioxid-haltige keramische Wärmedämmschicht auf einem Turbinenbauteil funkenerosiv bearbeitet wird.

10. Vorrichtung (1, 16) zum funkenerosiven Bearbeiten eines keramischen Materials (6) mit einer Halterung (2) für das keramische Material (6), einer Bearbeitungselektrode (3), einem Generator (4) und einem Bearbeitungsraum (5), wobei die Halterung (2) und die Bearbeitungselektrode (3) in dem Bearbeitungsraum (5) angeordnet und elektrisch leitend mit dem Generator (4) verbunden sind,
**dadurch gekennzeichnet, dass**
eine oder mehrere Heizeinrichtungen (7, 17) vorgesehen sind, um das keramische Material (6) in der Halterung (2) ganz oder teilweise zu erhitzen.

11. Vorrichtung (1, 16) nach Anspruch 10,
**dadurch gekennzeichnet, dass**
die Heizeinrichtung (7) ausgebildet ist, das keramische Material (6) in der Halterung (2) lokal in einem Bearbeitungsbereich (15) zu erhitzen.

12. Vorrichtung (1, 16) nach Anspruch 11,
**dadurch gekennzeichnet, dass**
die Heizeinrichtung als Ofen (17) ausgebildet ist.

13. Vorrichtung (1, 16) nach einem der Ansprüche 10 bis 12,
**dadurch gekennzeichnet, dass**
einer oder mehrere Strahler,
insbesondere Wärme- und/oder Laserstrahler vorgesehen sind, um das keramische Material (6) insbesondere lokal in einem Bearbeitungsbereich (15) zu erhitzen.

14. Vorrichtung (1, 16) nach einem der Ansprüche 10 bis 13,
**dadurch gekennzeichnet, dass**
eine Einrichtung zum Einleiten eines heißen, insbesondere gasförmigen Dielektrikum (7) in den Bearbeitungsraum (5) vorgesehen ist.

15. Vorrichtung (1, 16) nach Anspruch 14,
**dadurch gekennzeichnet, dass**
die Einrichtung zum Einleiten des heißen Dielektrikum (7) ausgebildet ist, das heiße Dielektrikum lokal auf einen Bearbeitungsbereich (15) des keramischen Materials (6) abzugeben.

16. Vorrichtung (1, 16) nach Anspruch 15,
**dadurch gekennzeichnet, dass**
die Einrichtung zum Einleiten des heißen Dielektrikum (7) ausgebildet ist, das heiße Dielektrikum durch eine Bohrung (13) in der Bearbeitungselektrode (3) lokal auf den Bearbeitungsbereich (15) des keramischen Materials (6) abzugeben.

17. Vorrichtung (1, 16) nach einem der Ansprüche 10 bis 16,
**dadurch gekennzeichnet, dass**
die Bearbeitungselektrode (3) aus einem keramischen, insbesondere Zirconiumdioxid-haltigen Material (6) besteht und eine oder mehrere Heizeinrichtungen ausgebildet sind, die Bearbeitungselektrode (3) zu erhitzen.
